# EUROPEAN PATENT SPECIFICATION

(11) **EP 3 628 918 B1**
(45) Date of publication and mention of the grant of the patent: **22.01.2025**
(21) Application number: 18382690.8
(22) Date of filing: 27.09.2018
(51) Int. Cl.: F21V 8/00, G09F 13/18, G09F 23/00

(54) **METHOD FOR MANUFACTURING AN OPTICAL DEVICE FOR A HOUSEHOLD APPLIANCE AND OPTICAL DEVICE**
VERFAHREN ZUR HERSTELLUNG EINER OPTISCHEN VORRICHTUNG FÜR EIN HAUSHALTSGERÄT UND OPTISCHE VORRICHTUNG
PROCÉDÉ DE FABRICATION D'UN DISPOSITIF OPTIQUE POUR UN APPAREIL MÉNAGER ET DISPOSITIF OPTIQUE

(43) Date of publication of application: 01.04.2020
(73) Proprietor: BSH Hausgeräte GmbH, 81739 München (DE)
(72) Inventor: Alaman Aguilar, Jorge, 50012 Zaragoza (ES); Sanchez Somolinos, Carlos, 50010 Zaragoza (ES)

(56) References cited:
- EP-A1- 1 505 414
- EP-A1- 2 631 686
- WO-A1-2018/109619
- WO-A2-99/36830
- US-A1- 2011 116 152
- US-A1- 2011 305 874
- US-B1- 6 833 960

## Description

The present invention concerns a method for manufacturing an optical device for a household appliance. The present invention further comprises such an optical device.

The installation of light sources in household appliances with limited installation space such as a dishwashers, washing machines, dryers, wash-dryers, ovens, cooktops, refrigerators, coffee machines... is often difficult to perform. From conventional household appliances it is known that the light source for generating light should not be placed at the point in the household appliance where it is to be perceived by the user of the household appliance, but at a different, more suitable position in terms of installation space. The light generated by the light source is coupled into a suitable optic - for example a light wave guide - and thus transported to the desired location in the household appliance, where the light is then visibly emitted by the user of the household appliance.

US 2011/0116152 A1 discloses a device which includes optical elements such as microlenses or optical fibers that are printed with liquid ink, by known scanning printing techniques such as for example flexography. Each optical element has a transparent core printed by a first ink layer, that is sufficiently distant from the closest cores so as not to amalgamate with them by coalescence, before being hardened. This core is then covered with one or several so-called additional layers which can be flat tint layers in order to finalize the shape of the optical element in question. The section of the optical elements is determined by the difference in surface tension between said additional layers and the printing substrate.

EP 1 505 414 A1 discloses light-scattering structures (20) which are applied directly onto a surface (18) of an optical conductor (10).

US 6 833 960 B1 discloses a lenticular imaging system for viewing printed images on a printed article, the lenticular imaging system creating the illusion of three-dimensional (3-D) images moving or floating across the printed article. The lenticular imaging system comprises a substrate with a plurality of images preferably printed on at least one of the surfaces of the substrate and a plurality of spaced-apart convex lenses forming a lenticular lens array on-top of the plurality of images.

EP 2 631 686 A1 discloses a device for directing light beams, comprising a translucent substrate, and a light-directing structure on at least a portion of the substrate, wherein the light-directing structure comprises a substantially transparent material, which is arranged in a pattern on the substrate in such a way that the light-directing structure comprises at least one optical prism.

WO 99/36830 A2 discloses techniques for forming light diffusing or projection screens, comprising printing a transparent substrate. In preferred techniques, resin forming microlenses are deposited on one side of a transparent substrate and an opaque material is deposited on the opposite side so as to cover the areas between lenses.

US 2011/0305874 A1 discloses a process for obtaining a hydrophobic coating on a substrate, preferably consisting of a glass material, a ceramic or a glass-ceramic, said process comprises: a) a first deposition step, consisting in applying a primer first layer essentially consisting of the silicon oxycarbide SiOₓC_{y} type on said substrate, said primer layer having an RMS surface roughness of greater than 4 nm; b) an activation step, in which said SiOₓC_{y} primer layer is activated by a plasma of a gas or a mixture of gases; and c) a second deposition step, in which a hydrophobic coating comprising at least one fluorocompound, preferably a fluoroalkylsilane, is deposited on said first layer.

WO 2018/109619 A1 relates to a method for coating a base element for a household appliance component. The method comprises at least the steps of depositing at least one silicon dioxide containing layer onto at least one surface of the base element by combustion chemical vapour deposition and coating at least a portion of the at least one silicon dioxide layer using at least one fluorosilane.

It often proves to be problematic that the technical implementation of the optics described above for household appliances is associated with a high technical effort.

It is an object of the present invention to point out new ways in the production of optics for use in household appliances - hereinafter referred to as "optical device".

According to the invention, this task is solved by the subject matter of the independent patent claims 1 and 6. Advantageous embodiments are the subject matter of the dependent patent claims.

The basic idea of the invention is to produce an optical device for household appliances according to the method of claim 1 by contactless printing of an optical structure with lens-shaped optical elements on a light-conducting glass. If the light emitted by a suitable light source is coupled into said glass, it can propagate in the glass by multiple reflection at the interfaces to the outer environment of the glass until it meets a lens-shaped optical element of the optical structure arranged on the glass surface. After reflection on the optical structure, at least part of the reflected light exits the glass through the glass surface, where it can be perceived by a user of the household appliance. Using the method presented here, it is thus possible to "simulate" several light sources in an extremely flexible manner, i.e. to arrange the actual light source at a different position in or on the household appliance than perceived by the user of the household appliance or by the observer of the optical device. The invention-essential, contactless printing of the optical structure with the lens-shaped optical elements allows virtually any light pattern to be produced. By means of the method presented here, a wide variety of light scenarios can be realized on or in the household appliance.

The method for manufacturing an optical device for a household appliance, dishwashers, washing machines, dryers, wash-dryers, ovens, cooktops, refrigerators, coffee machines..., according to the invention comprises a first step a) according to which a substrate is provided from a light-conducting glass. In a second step b) following step a), this substrate is printed contactlessly with an optical structure comprising a plurality of lenticular optical elements. A surface of the substrate provided in step a) is subjected to a surface treatment prior to application of the optical structure according to step b), in which the surface is cleaned, activated by introducing the substrate in an O₃ chamber for some time, and provided with a hydrophobic surface coating by depositing fluorosilanes on the surface by a CVD technique

According to a preferred embodiment, a light-conducting intermediate layer is applied to the substrate before the non-contact printing of the optical structure by means of non-contact printing. With this embodiment, the light-conducting intermediate layer can thus be used to transport light from the light source to the optical structure.

Particularly preferred, in step b) of the inventive method, i.e. when printing the optical structure, are optical elements on the substrate which have a round, preferably an elliptical or circular geometry in a plan view of the substrate. Optical elements with such a geometry are particularly well suited as basic elements for implementing complex lighting scenarios.

In step b), optical elements with a convex geometry, preferably the geometry of a spherical segment, perpendicular to the surface of the substrate can be printed on the substrate without contact. The optical elements of the optical structure are printed onto the substrate in the form of spherical segment projections.

Following another advantageous embodiment, the surface of the substrate prepared in step a) is subjected to a surface treatment prior to step b), in which the surface is cleaned, activated and provided with a hydrophobic surface coating. This ensures that the optical elements printed on the substrate have a lenticular geometry.

The invention also relates to an optical device according to claim 6 for a household appliance, which can be manufactured by means of the aforementioned procedure, so that the aforementioned advantages of the inventive procedure are transferred to the optical device according to the invention. The ingenious optical device comprises a substrate made of translucent glass. A hydrophobic surface coating is made by depositing fluorosilanes on the cleaned and activated surface of the glass substrate by a CVD technique. An optical structure is arranged on the substrate, contactlessly printed on the hydrophobic surface coating, which comprises at least one optical element, preferably a plurality of lenticular optical elements.

According to an advantageous embodiment, the optical device comprises a light source which is arranged laterally on the substrate so that the light emitted by the light source can be coupled into the substrate.

According to another advantageous embodiment, a light-conducting intermediate layer is arranged between the optical structure and the substrate. In this training, this intermediate layer is used for the propagation of light from the light source to the optical elements.

The optical elements have a round, preferably elliptical or circular geometry in a plan view of the substrate. Optical elements with such a geometry are particularly easy to manufacture.

The individual optical elements are preferably arranged at a distance from each other.

The optical elements of the optical structure are particularly preferred as spherical-segment-shaped projections. Optical elements with such an geometry are particularly easy to produce.

Optical elements with a cross-section perpendicular to the surface of the substrate have a convex geometry, preferably the geometry of a spherical segment. Optical elements with such a geometry are particularly easy to produce.

Other important features and advantages of the invention result from the subclaims, the drawings and the corresponding figure description based on the drawings.

It is understood that the features mentioned above and those to be explained below can be used not only in the combination indicated, but also in other combinations or in a unique position.

Preferred examples of the invention are shown in the drawings and are discussed in more detail in the following description, whereby identical reference signs refer to identical or similar or functionally identical components.

It show schematically:
Fig. 1: an example of an ingenious optical device in a sectional view,
Fig. 2: the optical device of Fig. 1 in a plan view of the substrate,
Fig. 3 is a variant of the optical device according to Figures 1 and 2 with an interlayer arranged between the substrate and the optical structure.

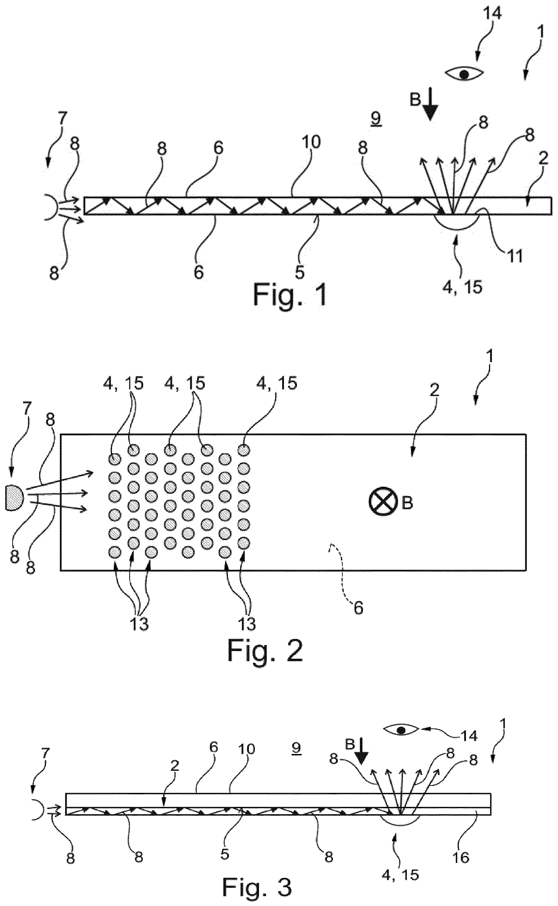

Figure 1 shows a schematic representation of an ingenious optical device 1 that can be used in a household appliance not shown in more detail in the figures. The optical device 1 comprises a substrate 2 made of a translucent glass, which is preferably flat and longitudinal in shape. It is advisable to use ceramic glass. An optical structure 3 is printed on a lower side 5 of substrate 2. The term "lower side" refers to a possible position of use of optical device 1 or to a possible installation state of optical device 1 in the household appliance.

The optical structure 3 comprises a plurality of lens-shaped optical elements 4, whereby in the example of Figure 1 only one such optical element 4 is shown for reasons of clarity. It can be seen that the optical structure 3 or the lenticular optical elements 4 can be designed as projections 15 with spherical segment geometry projecting from the lower side 5 of substrate 2.

The optical structure 3 with the lens-shaped optical elements 4 is applied to substrate 2 by means of a non-contact printing method. A hybrid polymer can be used as a material for the optical elements 4, which is suitable for contactless printing. A compound, the 3-glycidyloxy-propyltrimethoxysilane (GLYMO), a photoacid and BYK-33 is particularly suitable.

To ensure that the non-contact printed optical elements 4 have the required lens shape, it is necessary that the deposited drops have a spherical shape. Thus the drops are pretreated to achieve a superhydrophobic surface where the drops forming the optical elements 4 will remain as spherical as possible. This pretreatment consists of several steps. In a first step, the glass is cleaned to ensure a proper surface. In a further step the surface of the substrate is activated. This is achieved by introducing the glass in an O₃ chamber during some time, preferably more than 60 minutes. In a next step, fluorosilanes (1H,1H,2H,2H-perfluorooctyltrichlorosilanes, PFOTCISi) are deposited on the surface by a CVD technique. Around 5 microlitres of the fluorosilane can be deposited in a glass surface inside the chamber where the glass to be coated is also introduced. Vacuum is created in the chamber and during 30 minutes the fluorosilane evaporates and is deposited over the surface of the glass to be coated. In a last step of the pre-treatment, the substrate for at least 10 minutes at a temperature of about 110 °C.

Adjacent to a lateral edge 6 of substrate 2 a light source 7 is provided, for example in the form of one or more LEDs emitting light 8 which is coupled into the transparent substrate 2 so that it can propagate in substrate 2. The light source 7 can be arranged laterally, i.e. in a lateral extension of substrate 2 adjacent to it. The refractive index of the material of substrate 2 is preferably selected such that the light 8 cannot or only to a negligible extent reach the environment 9 of the substrate 2 from substrate 2, but is totally reflected at the boundary surface 10 between substrate 2 and the air 11 present in the environment 9. Substrate 2 thus follows the operating principle of a light waveguide.

As Figure 1 shows, the light 8 coupled into substrate 2 strikes the optical element 4 after multiple reflections at the interface 10. part of the light 8 hitting the optical element 4 is reflected at the interface 11 between substrate 2 and the optical element 4, so that after reflection it strikes the interface 11 between substrate 10 and air 12, passes through the interface 11 and then exits into the outer environment 9, where it can be perceived by an observer 14.

Figure 2 shows that on the lower side 6 of the transparent substrate 2 a plurality of optical elements 4 can be arranged at a distance from each other. The optical elements 4 have a round geometry in the plan view of substrate 2 along the viewing direction B. In the example of Figure 2, optical elements 4 with circular geometry are shown as an example. An elliptical geometry is also conceivable (not shown). In the example of Figure 2, the optical elements 4 are arranged in the form of a grid with several grid lines 13, whereby 2 adjacent grid lines 13 can be arranged offset from one another along the direction of propagation of light 8 in the substrate 2. This ensures that the grid lines 13 facing away from the light source 7 can also hit sufficient light 8.

Figure 3 shows a further development of the example of Figure 1. In the optical device 1 of Figure 3, a light-conducting intermediate layer 16 is arranged between the optical structure with the optical element 4 and the substrate 2. This means that the light emitted by the light source 7 of the optical device 1 is coupled into the intermediate layer 16 according to Figure 3 and spreads there to the optical element 4 with multiple total reflection.

For example, the compound already described above as a suitable material for optical structure 3, supplemented by a refractive index-increasing component such as SU8 or diphenyl-dimethoxysilane, can be considered as material for intermediate layer 16. This ensures that the light 8 propagating in the intermediate layer 16 is reflected on its way to the optical element 4 at the interfaces to the substrate 2 or outer environment 9 so that it cannot exit the intermediate layer 16 before it hits the optical element 4. Like the optical structure 3, the intermediate layer 16 can also be applied to substrate 2 by contactless printing.

### List of reference signs

1 optical device
2 substrate
3 optical structure
4 optical element
5 lower side
6 border
7 light source
8 light
9 environment
10 interface (substrate/environment)
11 Interface (substrate/optical element)
12 air
13 raster line
14 observer
15 projection
16 intermediate layer
B direction of view

## Claims

1. Method for manufacturing an optical device (1) for a household appliance, comprising the following steps: a) providing a substrate (2) of translucent glass; b) contactlessly printing the substrate (2) with an optical structure (3) comprising a plurality of lenticular optical elements (4), **characterized in that** a surface of the substrate (2) provided in step a) is subjected to a surface treatment prior to application of the optical structure (3) according to step b), in which the surface is cleaned, activated by introducing the substrate (2) in an O₃ chamber for some time, and provided with a hydrophobic surface coating by depositing fluorosilanes on the surface by a CVD technique.

2. The method according to claim 1, **characterized in that** a light-conducting intermediate layer (16) is applied to the substrate (2) by non-contact printing before contactless printing of the optical structure (3) according to step b).

3. The method according to claim 1 or 2, **characterized in that** in step b) optical elements (4) are applied having a round, preferably elliptical or circular, geometry in a plan view of the substrate (2).

4. The method according to any of claims 1 to 3, **characterized in that** the optical elements (4) provided in step b) have a convex geometry, preferably the geometry of a spherical segment, in a cross-section perpendicular to the surface of the substrate (2).

5. The method according to any of the preceding claims, **characterized in that** the optical elements (4) of the optical structure (3) are printed in the form of spherical segment projections (15).

6. Optical device (1) for a household appliance, manufactured by the method according to any of the preceding claims, the device comprising:
- a substrate (2) of translucent glass;
- a hydrophobic surface coating which is made by depositing fluorosilanes on the cleaned and activated surface (2) of the glass substrate (2) by a CVD technique; and
- an optical structure (3), contactlessly printed on the hydrophobic surface coating of the substrate (2), comprising a plurality of lenticular optical elements (4).

7. Optical device according to claim 6, **characterized in that** the optical device (1) further comprises a light source (7) arranged laterally on the substrate (2) so that the light emitted by the light source (7) can be coupled into the substrate (2).

8. Optical device according to claim 6 or 7, **characterized in that** a light-conducting interlayer (16) is arranged between the optical structure (3) and the substrate (2).

9. Optical device according to any of claims 6 to 8, **characterized in that** the optical elements (4) of the optical structure (3) have a round, preferably elliptical or circular geometry, in a plan view of the substrate (2).

10. Optical device according to any of claims 6 to 9, **characterized in that** the optical elements (4) of the optical structure (3) are each arranged at a distance from one another.

11. Optical device according to any of claims 6 to 10, **characterized in that** the optical elements (4) of the optical structure (3) are formed as spherical segment projections (15).

12. Optical device according to any of claims 6 to 10, **characterized in that** the optical elements (4) of the optical structure (3) each have a convex geometry, preferably the geometry of a spherical segment, in a cross-section perpendicular to the surface of the substrate (2).

## Patentansprüche

1. Verfahren zum Fertigen einer optischen Vorrichtung (1) für ein Haushaltsgerät, das folgende Schritte umfasst: a) Bereitstellen eines Substrats (2) aus lichtdurchlässigem Glas, b) kontaktloses Bedrucken des Substrats (2) mit einer optischen Struktur (3), die mehrere linsenförmige optische Elemente (4) umfasst, **dadurch gekennzeichnet, dass** eine Oberfläche des in Schritt a) bereitgestellten Substrats (2) vor dem Aufbringen der optischen Struktur (3) gemäß Schritt b) einer Oberflächenbehandlung unterzogen wird, bei der die Oberfläche gereinigt, durch Einbringen des Substrats (2) in eine O3-Kammer für einige Zeit aktiviert und durch Abscheiden von Fluorsilanen auf der Oberfläche mithilfe einer CVD-Technik mit einer hydrophoben Oberfläche versehen wird.

2. Verfahren nach Anspruch 1, **dadurch gekennzeichnet, dass** durch kontaktfreies Bedrucken eine lichtleitende Zwischenschicht (16) auf das Substrat (2) aufgebracht wird, bevor die optische Struktur (3) gemäß Schritt b) kontaktlos aufgedruckt wird.

3. Verfahren nach Anspruch 1 oder 2, **dadurch gekennzeichnet, dass** in Schritt b) optische Elemente (4) mit einer in Draufsicht auf das Substrat (2) runden, vorzugsweise elliptischen oder kreisrunden Geometrie aufgebracht werden.

4. Verfahren nach einem der Ansprüche 1 bis 3, **dadurch gekennzeichnet, dass** die in Schritt b) bereitgestellten optischen Elemente (4) im Querschnitt senkrecht zur Oberfläche des Substrats (2) eine konvexe Geometrie, vorzugsweise die Geometrie eines Kugelsegments aufweisen.

5. Verfahren nach einem der vorhergehenden Ansprüche, **dadurch gekennzeichnet, dass** die optischen Elemente (4) der optischen Struktur (3) in Form von Kugelsegmentvorsprüngen (15) aufgedruckt werden.

6. Optische Vorrichtung (1) für ein Haushaltsgerät, die mithilfe des Verfahrens nach einem der vorhergehenden Ansprüche gefertigt ist und Folgendes umfasst:
- ein Substrat (2) aus lichtdurchlässigem Glas,
- eine hydrophobe Oberflächenbeschichtung, die durch Abscheiden von Fluorsilanen auf der gereinigten und aktivierten Oberfläche (2) des Glassubstrats (2) mithilfe einer CVD-Technik hergestellt ist, und
- eine optische Struktur (3), die kontaktlos auf die hydrophobe Oberflächenbeschichtung des Substrats (2) aufgedruckt ist und mehrere linsenförmige optische Elemente (4) umfasst.

7. Optische Vorrichtung nach Anspruch 6, **dadurch gekennzeichnet, dass** die optische Vorrichtung (1) ferner eine Lichtquelle (7) umfasst, die seitlich an dem Substrat (2) angeordnet ist, so dass das von ihr emittierte Licht in das Substrat (2) eingekoppelt werden kann.

8. Optische Vorrichtung nach Anspruch 6 oder 7, **dadurch gekennzeichnet, dass** zwischen der optischen Struktur (3) und dem Substrat (2) eine lichtleitende Zwischenschicht (16) angeordnet ist.

9. Optische Vorrichtung nach einem der Ansprüche 6 bis 8, **dadurch gekennzeichnet, dass** die optischen Elemente (4) der optischen Struktur (3) eine in Draufsicht auf das Substrat (2) runde, vorzugsweise elliptische oder kreisrunde Geometrie aufweisen.

10. Optische Vorrichtung nach einem der Ansprüche 6 bis 9, **dadurch gekennzeichnet, dass** die optischen Elemente (4) der optischen Struktur (3) jeweils in einem Abstand zueinander angeordnet sind.

11. Optische Vorrichtung nach einem der Ansprüche 6 bis 10, **dadurch gekennzeichnet, dass** die optischen Elemente (4) der optischen Struktur (3) als Kugelsegmentvorsprünge (15) ausgebildet sind.

12. Optische Vorrichtung nach einem der Ansprüche 6 bis 10, **dadurch gekennzeichnet, dass** die optischen Elemente (4) der optischen Struktur (3) im Querschnitt senkrecht zur Oberfläche des Substrats (2) eine konvexe Geometrie, vorzugsweise die Geometrie eines Kugelsegments aufweisen.

## Revendications

1. Procédé de fabrication d'un dispositif optique (1) pour un appareil électroménager, comprenant les étapes suivantes :
a) la fourniture d'un substrat (2) de verre translucide, b) l'impression sans contact du substrat (2) avec une structure optique (3) comprenant une pluralité d'éléments optiques lenticulaires (4), **caractérisé en ce qu'**une surface du substrat produite dans l'étape a) est soumise à un traitement de surface avant l'application de la structure optique (3) selon l'étape b), dans lequel la surface est nettoyée, activée en introduisant le substrat (2) dans une chambre d'O₃ pendant un certain temps, et pourvue d'un revêtement de surface hydrophobe en déposant des fluorosilanes sur la surface par une technique de dépôt chimique en phase vapeur (CVD).

2. Procédé selon la revendication 1, **caractérisé en ce qu'**une couche intermédiaire conductrice de lumière (16) est appliquée sur le substrat (2) par une impression sans contact avant l'impression sans contact de la structure optique (3) selon l'étape b).

3. Procédé selon la revendication 1 ou 2, **caractérisé en ce que**, dans l'étape b) des éléments optiques (4) sont appliqués ayant une géométrie ronde, de préférence elliptique ou circulaire dans une vue en plan du substrat (2).

4. Procédé selon l'une quelconque des revendications 1 à 3, **caractérisé en ce que** les éléments optiques (4) produits dans l'étape b) ont une géométrie convexe, de préférence la géométrie d'un segment sphérique, dans une coupe transversale perpendiculaire à la surface du substrat (2).

5. Procédé selon l'une quelconque des revendications précédentes, **caractérisé en ce que** les éléments optiques (4) de la structure optique (3) sont imprimés sous la forme de protubérances de segment sphérique (15).

6. Dispositif optique (1) pour un appareil électroménager, fabriqué par le procédé selon l'une quelconque des revendications précédentes, le dispositif comprenant :
- un substrat (2) de verre translucide,
- un revêtement de surface hydrophobe qui est formé en déposant des fluorosilanes sur la surface nettoyée et activée (2) du substrat de verre (2) par une technique CVD, et
- une structure optique (3), imprimée sans contact sur le revêtement de surface hydrophobe du substrat (2), comprenant une pluralité d'éléments optiques lenticulaires (4).

7. Dispositif optique selon la revendication 6, **caractérisé en ce que** le dispositif optique (1) comprend en outre une source de lumière (7) agencée latéralement sur le substrat (2) de sorte que la lumière émise par la source de lumière (7) peut être couplée dans le substrat (2).

8. Dispositif optique selon la revendication 6 ou 7, **caractérisé en ce qu'**une couche intermédiaire conductrice de lumière (16) est agencée entre la structure optique (3) et le substrat (2).

9. Dispositif optique selon l'une quelconque des revendications 6 à 8, **caractérisé en ce que** les éléments optiques (4) de la structure optique (3) ont une géométrie ronde, de préférence elliptique ou circulaire, dans une vue en plan du substrat (2).

10. Dispositif optique selon l'une quelconque des revendications 6 à 9, **caractérisé en ce que** les éléments optiques (4) de la structure optique (3) sont disposés chacun à une distance l'un de l'autre.

11. Dispositif optique selon l'une quelconque des revendications 6 à 10, **caractérisé en ce que** les éléments optiques (4) de la structure optique (3) sont constitués sous forme de protubérances de segment sphérique (15).

12. Dispositif optique selon l'une quelconque des revendications 6 à 10, **caractérisé en ce que** les éléments optiques (4) de la structure optique (2) ont chacun une géométrie convexe, de préférence la géométrie d'un segment sphérique, dans une coupe transversale perpendiculaire à la surface du substrat (2).
